# EUROPEAN PATENT APPLICATION

(11) **EP 1 826 755 A2**
(43) Date of publication of application: **29.08.2007**
(21) Application number: 07075003.9
(22) Date of filing: 04.01.2007
(51) Int. Cl.: G11B 7/085

(54) **Optical pickup control apparatus and method**

(30) Priority: 24.02.2006 KR 20060018128
(71) Applicant: Samsung Electronics Co., Ltd., Suwon-si Gyeonggi-do (KR)
(72) Inventor: Kay, Hyon Sok, Yongsan-gu Seoul (KR)
(74) Representative: D'Halleweyn, Nele Veerle Trees Gertrudis

(57) **Abstract**

An optical pickup control apparatus including a pickup unit to apply an optical signal to an optical disc, to receive an optical signal from the optical disc, and to convert the optical signal into an electric signal; a collimating lens in the pickup unit to correct a spherical aberration of the optical signal; a detecting unit to detect an opening/closing operation of a tray on which the optical disc is placed, and to output a corresponding detection signal; a first controller to perform a first initialization process that causes the pickup unit to move to a first initial location upon receiving the detection signal; and a second controller to perform a second initialization process that causes the collimating lens to move to a second initial location upon receiving the detection signal, wherein the first and second initialization processes are simultaneous.

## Description

### BACKGROUND OF THE INVENTION

### 1. Field of the Invention

Aspects of the present invention relate to an optical pickup control apparatus and a method of operating the optical pickup control apparatus, and, more particularly, to an optical pickup control apparatus and a method of reducing an initialization time of an optical pickup unit after an optical disc is seated in a tray or before the optical disc is ejected from the tray.

### 2. Description of the Related Art

Generally, a variety of optical discs that are capable of storing data have been widely used throughout the world. For example, CDs (Compact Discs), DVDs (Digital Versatile Discs), HD-DVDs (High Definition-DVDs), and BDs (Blu-ray Discs), etc., have been used. The above-mentioned optical discs are classified into single-layered discs and multi-layered discs according to the number of data record layers storing data contained in the optical disc. The multi-layered discs include at least two data record layers in a single disc. Recently, the aforementioned dual-layered discs have been widely used as DVD-based optical discs.

A light beam (or an optical signal), focused by an objective lens, records and/or reads data onto/from the above-mentioned optical discs or the multi-layered discs. The data recording capacity is determined by an optical spot generated on the discs by the light beam, the size of which is determined by a wavelength of the light source and an NA (Numerical Aperture) of the objective lens.

Therefore, the wavelength of the light source and the NA of the objective lens should be considered when attempting to reduce the size of the optical spot focused on the optical disc. For example, the DVD uses an optical signal having a predetermined wavelength of 650nm and an objective lens having a predetermined NA of 0.6. The BD, having a storage capacity over five times higher than that of the DVD, uses an optical signal having a predetermined wavelength of 405nm and an objective lens having a predetermined NA of 0.85.

If an objective lens having a high NA is adapted to increase a recording density of an optical disc, unexpected spherical aberrations arise that are caused by a difference between recording thicknesses that serve to protect the data recording layer of the optical discs. Also, spherical aberration that depends upon a difference in location of the recording layers occurs in the multi-layered discs. In order to correct the above-mentioned spherical aberration, a collimating lens, which is generally installed in the optical pickup unit, is used.

By way of review, it is noted that spherical aberration is generated by a difference in a focusing point of the optical signal incident upon the lens. In more detail, when the optical signal passes through the lens, the optical signals passing through peripheral parts of the lens is focused at a shorter focal point than the other optical signals passing through the center part of the lens. As such, the focal point of the center part of the lens is different from the focal points of the peripheral parts of the lens.

Generally, the apparatuses that record/reproduce data onto/from optical discs are equipped with the collimating lens (hereinafter referred to as an optical-disc recording/reproducing apparatus), and detect whether a new optical disc is seated in their trays. If, in a particular optical-disc recording/reproducing apparatus, a new optical disc is seated in the tray, the optical-disc recording/reproducing apparatus performs a series of initialization processes to allow the optical pickup unit to normally access a lead-in area of the seated optical disc, to determine type information of the seated disc, and to execute a variety of operations such as a signal control.

In other words, if the optical disc is seated in the tray, the optical pickup unit moves to an inner area of the optical disc where the beginning of the lead-in area of the optical disc is located. The above-mentioned operation is called the initialization process of the optical pickup unit.

If the initialization process of the optical pickup unit is terminated, the collimating lens contained in the optical pickup unit moves to an initial location, in such a way that the initialization process of the collimating lens is executed.

After the above-mentioned initialization processes of the optical pickup unit and the collimating lens are completed and terminated, respectively, the optical-disc recording/reproducing apparatus determines the type information of the seated optical disc, adjusts the electrical signal, which are converted from the optical signal reflected from the optical disc, receives a command from a user, and executes a specific function corresponding to the user command.

In conclusion, the above-mentioned optical-disc recording/reproducing apparatus requires a long warming-up time until executing the user command after the tray has been closed. The warming-up time includes the sum of an initialization time of the optical pickup unit and an initialization time of the collimating lens, such that a standby time of the user is unnecessarily increased.

### SUMMARY OF THE INVENTION

Therefore, an aspect of the invention provides an optical pickup control apparatus to reduce an initialization time of an optical pickup unit and an initialization time of a collimating lens. Another aspect of the invention provides an optical pickup control method to reduce an initialization time of an optical pickup unit and an initialization time of a collimating lens.

In accordance with the invention, the above and/or other aspects may be achieved by the provision of an optical pickup control apparatus comprising: a pickup unit to apply an optical signal to an optical disc, to receive a reflected optical signal from the optical disc, and to convert the received optical signal into an electric signal; a collimating lens installed in the pickup unit to correct a spherical aberration of the optical signal; a detecting unit to detect an opening or closing operation of a tray on which the optical disc is placed, and to output a detection signal that corresponds to the detected operation; a first controller to perform a first initialization process that causes the pickup unit to move to a first initial location upon receiving the detection signal; and a second controller to perform a second initialization process that causes the collimating lens to move to a second initial location upon receiving the detection signal, wherein the first initialization process and the second initialization process are simultaneously performed.

According to an aspect of the invention, the first initialization process and the second initialization process are performed after the tray is closed.

According to an aspect of the invention, the first initialization process and the second initialization process are performed before the tray is opened.

According to an aspect of the invention, the first controller receiving the detection signal firstly moves the pickup unit to an inner area of the optical disc according to the received detection signal, and moves the pickup unit to a first initial location if the pickup unit reaches a predetermined reference location.

According to an aspect of the invention, the second controller receiving the detection signal moves the collimating lens toward a specific direction spaced apart from the optical disc according to the received detection signal, and moves the collimating lens to a second initial location if the collimating lens reaches a predetermined reference location.

In accordance with another aspect of the present invention, there is provided an optical pickup control apparatus comprising: a pickup unit to apply an optical signal to an optical disc, to receive a reflected optical signal from the optical disc, and to convert the received optical signal into an electric signal; a collimating lens installed in the pickup unit to correct a spherical aberration of the optical signal; a detecting unit to detect an opening or closing operation of a tray on which the optical disc is placed, and to output a detection signal corresponding to the detected operation; and a controller to perform a first initialization process that causes the pickup unit to move to a first initial location according to the detection signal, and to simultaneously perform a second initialization process to cause the collimating lens to move to a second initial location according to the detection signal.

According to an aspect of the invention, the first initialization process and the second initialization process are performed after the tray is closed.

According to an aspect of the invention, the first initialization process and the second initialization process are performed before the tray is opened.

According to an aspect of the invention, the controller receiving the detection signal firstly moves the pickup unit to an inner area of the optical disc according to the received detection signal, and moves the pickup unit to the first initial location if the pickup unit reaches a predetermined reference location.

According to an aspect of the invention, the controller receiving the detection signal moves the collimating lens toward a specific direction spaced apart from the optical disc according to the received detection signal, and moves the collimating lens to the second initial location if the collimating lens reaches a predetermined reference location.

In accordance with yet another aspect of the present invention, there is provided an optical pickup control method comprising: detecting an opening or closing operation of a tray of a recording/reproducing apparatus, and outputting a detection signal corresponding to the detected operation; and if the detection signal occurs, moving a pickup unit to a first reference location, and at the same time moving a collimating lens to a second reference location; and if the moving operations of the pickup unit and the collimating lens are terminated, moving the pickup unit to a first initial location, and, at the same time, moving the collimating lens to a second initial location.

According to an aspect of the invention, the moving is performed after the tray is closed.

According to an aspect of the invention, the moving is performed before the tray is opened.

Additional and/or other aspects and advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram illustrating an optical pickup control apparatus according to a first embodiment of the present invention;
FIG. 2 is a block diagram illustrating an optical pickup control apparatus according to a second embodiment of the present invention;
FIG. 3 is a detailed diagram of the pickup unit shown in FIGS. 1 and 2 according to the present invention;
FIG. 4 is a flow chart illustrating a method for controlling the optical pickup apparatus according to an embodiment of the present invention; and
FIG. 5 is a flow chart illustrating a method of controlling the optical pickup apparatus according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

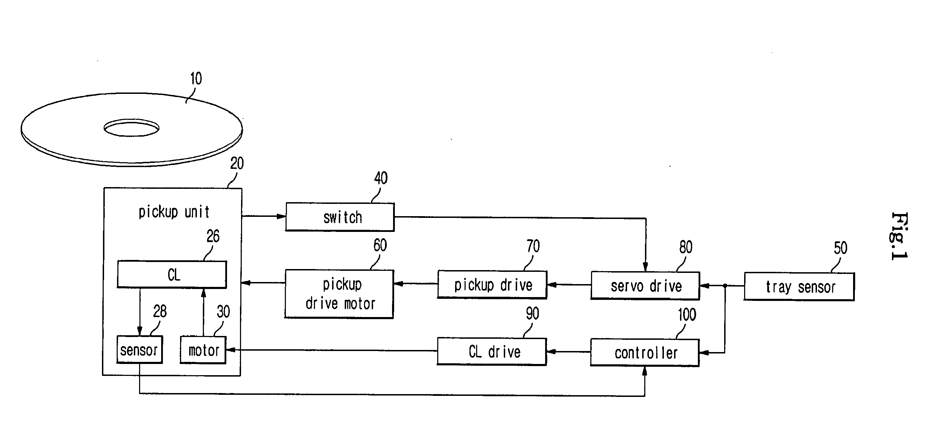

FIG. 1 is a block diagram illustrating an optical pickup control apparatus according to a first embodiment of the present invention. As shown in FIG 1, the optical pickup control apparatus includes an optical disc 10, a pickup unit 20, a switch 40, a tray sensor 50, a pickup drive motor 60, a pickup drive 70, a servo drive 80, a CL drive 90, and a controller 100. The pickup unit 20 includes a collimating lens (CL) 26, a sensor 28, and a motor 30.

The optical disc 10 may be any one of a CD, a DVD, an HD-DVD, and a BD. The different types of CD-based optical disc include a CD-R (CD-Recordable) and a CD-RW (CD-ReWritable). The different types of DVD-based optical disc include a DVD-R (DVD-Recordable), a DVD+R, a DVD-RW (DVD-ReWritable), and a DVD-RAM (DVD-Random Access Memory).

The pickup unit 20 illuminates a laser beam onto a signal track of the optical disc 10, receives a reflection beam reflected from a signal recording surface of the optical disc 10, converts the received reflection beam into an electric signal corresponding to the reflection beam, and outputs the electric signal.

The collimating lens 26 converts the received optical signal into a parallel beam, such that any spherical aberration caused by the optical disc having different recording densities is corrected. Also, the collimating lens 26 corrects spherical aberration related to the location of the multiple recording layers of multi-layered discs.

The sensor 28 detects the location of the collimating lens 26 while the collimating lens 26 moves by searching for a reference location of the collimating lens 26. In other words, if the collimating lens 26 reaches the reference location, the sensor 28 outputs an ON signal. If the collimating lens 26 does not reach the reference location, the sensor 28 outputs an OFF signal.

The motor 30 may comprise a step motor, and provides a driving power to move the collimating lens 26 in forward and reverse directions. For example, in the case of the forward rotation of the collimating lens 26, the motor 30 controls the collimating lens 26 to be spaced apart from the objective lens. In the case of the reverse rotation of the collimating lens 26, the motor 30 controls the collimating lens 26 to be moved close to the objective lens.

The switch 40 prevents the pickup unit 20 from moving to a position having a predetermined threshold value when the pickup unit 20 moves to the inner area of the optical disc 10. If the pickup unit 20 moves to the inner area of the optical disc 10 and reaches a reference location corresponding to the threshold value, the pickup unit 20 contacts the switch 40, such that the switch 40 outputs the ON signal. Otherwise, if the pickup unit 20 is spaced apart from the switch 40, the switch 40 outputs the OFF signal.

The tray sensor 50 outputs an opening- or closing- signal of the tray (not shown) on which the optical disc 10 is placed. For example, if the tray is opened, the tray sensor 50 outputs an ON signal. Otherwise, if the tray is closed, the tray sensor 50 outputs an OFF signal.

The pickup drive motor 60 may comprise a sled motor, and generates a driving power to drive the pickup unit 10 in radial directions of the optical disc 10. The pickup drive 70 outputs a driving signal to drive the pickup drive motor 60.

The servo drive 80 receives the signals to open/close the tray from the tray sensor 50, receives a switch contact signal from the switch 40, and transmits control signals corresponding to the received signals to the pickup drive 70, such that the servo drive 80 initializes the pickup unit 20. For example, upon receiving the OFF signal from the tray sensor 50, the servo drive 80 transmits a control signal to the pickup drive 70 that causes the pickup unit 20 to move from a current location to an inner area of the optical disc 10. Thereafter, upon receiving the ON signal from the switch 40, whether the pickup unit 20 reaches the reference location corresponding to the threshold value is determined, such that the servo drive 80 transmits a control signal to the pickup drive 70 that causes the pickup unit 20 to move back to a predetermined initial location.

The servo drive 80 receives a focus error signal from a focus error signal generator (not shown), receives a tracking error signal from a tracking error signal generator (not shown), and performs control operations corresponding to the received signals. Meanwhile, the CL drive 90 provides the motor 30 with a drive signal that moves the collimating lens 26.

The controller 100 receives the signals to open/close the tray from the tray sensor 50, receives ON/OFF signals from the sensor 28, and transmits control signals corresponding to the received ON/OFF signals to the CL drive 90, such that the pickup unit 20 may be initialized. For example, upon receiving the OFF signal from the tray sensor 50, the controller 100 transmits a control signal to the CL drive 90 that causes the collimating lens 26 to move from a current location to a reference location of a predetermined direction that is spaced apart from the objective lens or the optical disc 10. Thereafter, upon receiving the ON signal from the sensor 28, whether the collimating lens 26 reaches the reference location is determined, such that the controller 100 transmits a control signal to the CL drive 90 that causes the collimating lens 26 to move back to a predetermined initial location.

Also, the controller 100 performs not only the above-mentioned control operations but also overall control operations associated with the optical-disc recording/reproducing apparatus.

In accordance with the embodiment shown in FIG. 1, the servo drive 80 and the controller 100 simultaneously execute the initialization processes of the pickup unit 20 and the collimating lens 26 upon receiving the control signal from the tray sensor 50. According to aspects of the invention, this results in the reduction of a required initialization time.

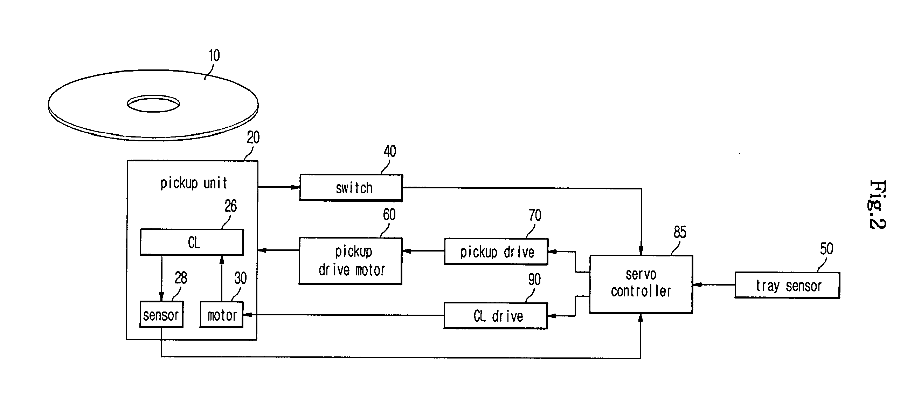

FIG. 2 is a block diagram illustrating an optical pickup control apparatus according to a second embodiment of the present invention. As shown in FIG. 2, the optical pickup control apparatus according to another embodiment of the present invention includes an optical disc 10, a pickup unit 20, a switch 40, a tray sensor 50, a pickup drive motor 60, a pickup drive 70, a servo drive 85, and a CL drive 90. The pickup unit 20 includes a collimating lens (CL) 26, a sensor 28, and a motor 30.

The optical disc 10, the pickup unit 20, the collimating lens 26, the sensor 28, the motor 30, the switch 40, the tray sensor 50, the pickup drive motor 60, the pickup drive 70, and the CD drive 90 have the same functions as in the above-mentioned embodiment shown in FIG. 1, such that their detailed descriptions will herein be omitted for the convenience of description.

The servo controller 85 receives signals from the tray sensor 50, the sensor 28, and the switch 40 in order to initialize the pickup unit 29 and the collimating lens 26, and transmits control signals corresponding to the received signals to the pickup drive 70 and the CL drive 90. For example, upon receiving the OFF signal from the tray sensor 50, the servo controller 85 transmits a control signal to the pickup drive 70 that causes the pickup unit 20 to move from a current location to an inner area of the optical disc 10, and, at the same time, transmits a control signal to the CL drive 90 that causes the collimating lens 26 to move from a current location to a reference location of a predetermined direction spaced apart from the objective lens or the optical disc 10.

Thereafter, upon receiving the ON signal from the switch 40, whether the pickup unit 20 reaches the reference location is determined, such that the servo controller 85 transmits a control signal to the pickup drive 70 that causes the pickup unit 20 to move back to a predetermined initial location.

Also, upon receiving the ON signal from the sensor 28, whether the collimating lens 26 reaches the reference location is determined, such that the servo controller 85 transmits a control signal to the CL drive 90 that causes the collimating lens 26 to move back to a predetermined initial location.

The servo controller 85 receives a focus error signal from a focus error signal generator (not shown), receives a tracking error signal from a tracking error signal generator (not shown), and performs control operations corresponding to the received signals.

Although the embodiments shown in FIGS. 1 and 2 have disclosed the initialization process after the tray is closed (i.e., if the tray sensor 50 outputs the OFF signal), it should be noted that the above-mentioned embodiments may also be applied to the other initialization process before the tray is opened.

In more detail, in the case of performing the initialization process before the tray is opened in the optical pickup control apparatus shown in FIG. 1, the servo drive 80 and the controller 100 must perform the above-mentioned control operations when the tray sensor 50 outputs the ON signal. In the case of performing the initialization process before the tray is opened in the optical pickup control apparatus shown in FIG. 2, the servo controller 85 must perform the above-mentioned control operations when the tray sensor 50 outputs the ON signal.

Although the servo controller 85 shown in FIG. 2 has performed the initialization processes of the pickup unit 20 and the collimating lens 26, it should be noted that the controller shown in FIG 1 may be designed to simultaneously perform the initialization processes of the pickup unit 20 and the collimating lens 26.

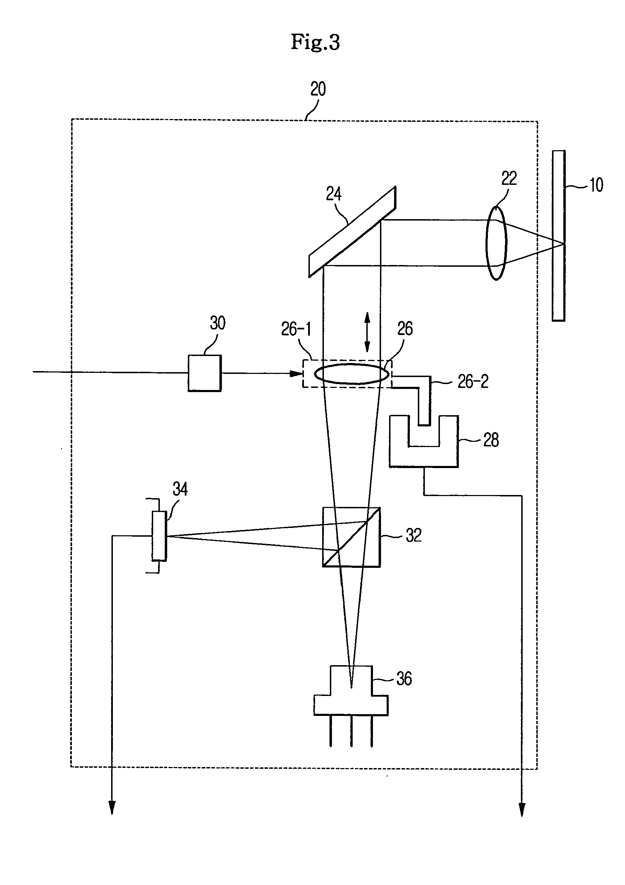

FIG 3 is a detailed diagram of the pickup unit shown in FIGS. 1 and 2 according to the present invention. As shown in FIG 3, the pickup unit 20 includes an objective lens 22, a reflection mirror 24, a collimating lens 26, a holder 26-1, a detecting unit 26-2, a sensor 28, a motor 30, an optical-path converter 32, an optical detector 34, and a light source 36.

The objective lens 22 is designed to include a predetermined number of NAs that are compatible with various optical discs (e.g., a CD, a DVD, an HD-DVD, or a BD), such that the objective lens 22 may record/reproduce data onto/from the optical disc. In order to reproduce data from an optical disc having different recording densities, a plurality of objective lenses having different NAs may also be used.

The reflection mirror 24 is located between the collimating lens 26 and the objective lens 22, and reflects a parallel optical signal from the collimating lens 26 to the objective lens 22.

The collimating lens 26 is located at a path of the optical signal that is incident upon the objective lens 22, such that the objective lens 22 is able to correct the spherical aberration generated when data is recorded or reproduced onto/from optical discs having different recording densities using the objective lens 22.

The collimating lens 26 converts the optical signal incident upon the objective lens 22 into a parallel optical signal. Thus, the collimating lens 26 corrects the spherical aberration caused by optical discs having different thicknesses.

The holder 26-1 supports the collimating lens 26, and moves in a direction that corresponds to and traces over an optical axis of the pickup unit 20 ranging from the light source 36 to the objective lens 22. Also, the holder 26-1 includes the detecting unit 26-2 to detect the location of the collimating lens 26 by the sensor 28.

The sensor 28 is provided to detect a reference location of the collimating lens 26 while the collimating lens 26 moves. The sensor 28 may be a photo-sensor. Therefore, the sensor 28 detects the operation of the detecting unit 26-2 according to a non-contact scheme, such that the sensor 28 outputs the ON signal when the collimating lens 26 reaches the reference location. The motor 30 provides a driving power to move the collimating lens 26.

The optical-path converter 32 is a polarization beam-splitter where an optical signal is reflected or penetrated by a polarization component of the incident optical signal. The optical-path converter 32 allows an optical signal that is generated from the light source 36 to penetrate the optical path converter 32, and reflects an optical signal that is reflected from the optical disc such that the reflected optical signal propagates toward the optical detector 34.

For example, the optical detector 34 is configured in the form of a photo-diode IC. Where the optical signal generated from the light source 36 is focused by the objective lens 22, and the focused optical signal is illuminated on the data recording surface of the optical disc, the optical detector 34 receives the optical signal reflected from the data recording surface, and converts the received optical signal into an electric signal corresponding to the received optical signal.

The light source 36 is provided to generate an optical signal having a wavelength that is suitable for use with type information of a used optical disc. The optical signal generated from the light source 36 is illuminated on the optical disc 10 via the objective lens 22, and is then reflected from the optical disc 10, such that data may be recorded or reproduced onto/from the optical disc 10.

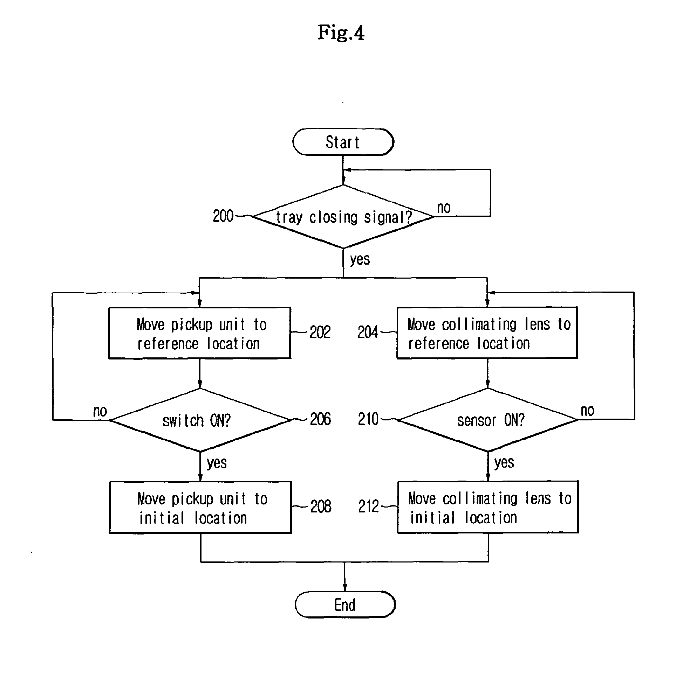

FIG. 4 is a flow chart illustrating a method for controlling the optical pickup apparatus shown according to an embodiment of the present invention. As shown in FIG. 4, the servo drive 80 and the controller 100 determine whether the signal to close the tray is received from the tray sensor 50 at operation 200. If the signal for closing the tray is received from the tray sensor 50 at operation 200, the servo drive 80 transmits a control signal to the pickup drive 70 that causes the pickup unit 20 to move to a reference location to initialize the pickup unit 20 at operation 202. At the same time, the controller 100 transmits a control signal to the CL drive 90 that causes the collimating lens 26 to move to a reference location to initialize the collimating lens 26 at operation 204.

Thereafter, the servo drive 80 determines whether the ON signal is received from the switch 40 at operation 206. If the ON signal is received from the switch 40 at operation 206, whether the pickup unit 20 has reached the reference location is determined, such that the servo drive 80 transmits a control signal to the pickup drive 70 that causes the pickup unit to move back to an initial location at operation 208.

At the same time, the controller 100 determines whether the ON signal is received from the sensor 28 at operation 210. If the ON signal is received from the sensor 28 at operation 210, the controller 100 determines that the collimating lens 26 reaches the reference location, and transmits a control signal to the CL drive 90 that causes the collimating lens 26 to move back to an initial location at operation 212.

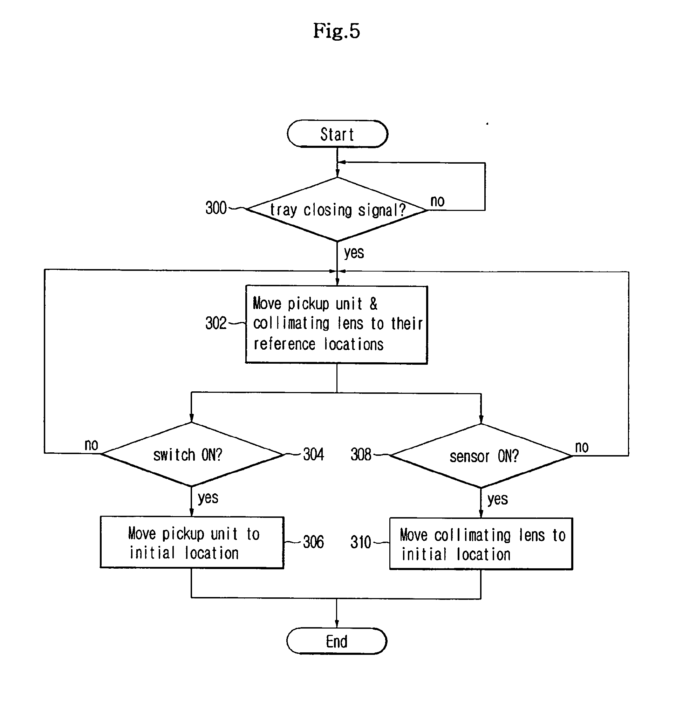

FIG. 5 is a flow chart illustrating a method of controlling the optical pickup apparatus shown according to a second embodiment of the present invention. In more detail, FIG 5 is a flow chart illustrating a method of controlling the servo controller 85 shown in FIG. 2 to simultaneously initialize the pickup unit 20 and the collimating lens 26.

Referring to FIG. 4, the servo controller 85 determines whether the signal to close the tray is received from the tray sensor 50 at operation 300. If the signal to close the tray is received from the tray sensor 50 at operation 300, the servo controller 85 transmits a control signal to the pickup drive 70 that causes the pickup unit 20 to move to a reference location, and, at the same time, transmits another control signal to the CL drive 90 that causes the collimating lens 26 to move to a reference location, such that both the pickup unit 20 and the collimating lens 26 are substantially simultaneously initialized.

Thereafter, the servo controller 85 determines whether the ON signal is received from the switch 40 at operation 304. If the ON signal is received from the switch 40 at operation 304, whether the pickup unit 20 reaches the reference location is determined, such that the servo controller 85 transmits a control signal to the pickup drive 70 that causes the pickup unit 20 to move back to an initial location at operation 306.

At the same time, the servo controller 85 determines whether the ON signal is received from the sensor 28 at operation 308. If the ON signal is received from the sensor 28 at operation 308, the servo controller 85 determines that the collimating lens 26 reaches the reference location, and transmits a control signal to the CL drive 90 that causes the collimating lens 26 to move back to an initial location at operation 310.

Although, according to the embodiments shown in FIGS. 4 and 5 the initialization process is undertaken after the tray is closed (i.e., if the tray sensor 50 outputs the OFF signal), it should be noted that the above-mentioned embodiments may also be applied to other initialization processes before the tray is opened.

As is apparent from the above description, the optical pickup control apparatus and method according to aspects of the present invention simultaneously perform the initialization processes of the pickup unit and the collimating lens after the tray is closed by the tray closing signal or before the tray is opened by the tray opening signal, such that a time required for the initialization may be reduced, resulting in the reduction of a user standby time.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. An optical pickup control apparatus comprising:
a pickup unit to apply an optical signal to an optical disc, to receive a reflected optical signal from the optical disc, and to convert the received optical signal into an electric signal;
a collimating lens installed in the pickup unit to correct a spherical aberration of the optical signal;
a detecting unit to detect an opening or closing operation of a tray on which the optical disc is placed, and to output a detection signal that corresponds to the detected operation;
a first controller to perform a first initialization process that causes the pickup unit to move to a first initial location upon receiving the detection signal; and
a second controller to perform a second initialization process that causes the collimating lens to move to a second initial location upon receiving the detection signal, wherein the first initialization process and the second initialization process are simultaneously performed.

2. The apparatus according to claim 1, wherein the first initialization process and the second initialization process are performed after the tray is closed.

3. The apparatus according to claim 1, wherein the first initialization process and the second initialization process are performed before the tray is opened.

4. The apparatus according to claim 1, wherein the first controller receiving the detection signal moves the pickup unit to an inner area of the optical disc according to the received detection signal, and then moves the pickup unit to the first initial location if the pickup unit reaches a first reference location.

5. The apparatus according to claim 1, wherein the second controller receiving the detection signal moves the collimating lens away from the optical disc according to the received detection signal, and then moves the collimating lens to a second initial location if the collimating lens reaches a second reference location.

6. An optical pickup control apparatus comprising:
a pickup unit to apply an optical signal to an optical disc, to receive a reflected optical signal from the optical disc, and to convert the received optical signal into an electric signal;
a collimating lens installed in the pickup unit to correct a spherical aberration of the optical signal;
a detecting unit to detect an opening or closing operation of a tray on which the optical disc is placed, and to output a detection signal corresponding to the detected operation; and
a controller to perform a first initialization process that causes the pickup unit to move to a first initial location according to the detection signal, and to simultaneously perform a second initialization process to cause the collimating lens to move to a second initial location according to the detection signal.

7. The apparatus according to claim 6, wherein the first initialization process and the second initialization process are performed after the tray is closed.

8. The apparatus according to claim 6, wherein the first initialization process and the second initialization process are performed before the tray is opened.

9. The apparatus according to claim 6, wherein the controller receiving the detection signal moves the pickup unit to an inner area of the optical disc according to the received detection signal, and then moves the pickup unit to the first initial location if the pickup unit reaches a first reference location.

10. The apparatus according to claim 6, wherein the controller receiving the detection signal moves the collimating lens away from the optical disc according to the received detection signal, and then moves the collimating lens to a second initial location if the collimating lens reaches a second reference location.

11. An optical pickup control method comprising:
detecting an opening or closing operation of a tray of a recording/reproducing apparatus, and outputting a detection signal corresponding to the detected operation; and
if the detection signal occurs, moving a pickup unit to a first reference location, and at the same time moving a collimating lens to a second reference location; and
if the moving operations of the pickup unit and the collimating lens are terminated, moving the pickup unit to a first initial location, and, at the same time, moving the collimating lens to a second initial location.

12. The method according to claim 11, wherein the moving is performed after the tray is closed.

13. The method according to claim 11, wherein the moving is performed before the tray is opened.

14. A recording and/or reproducing apparatus to record and/or reproduce information onto/from an optical disc, comprising:
a tray on which the optical disc is placed to be opened and closed relative to the apparatus;
an optical pickup control apparatus, including a pickup unit to record/reproduce information onto/from the optical disc using an optical signal reflected therefrom, and a collimating lens installed in the pickup unit to correct a spherical aberration of the optical signal;
a detecting unit to detect an opening or closing of the tray, and to output a detection signal that corresponds to the detected operation;
a controlling unit to simultaneously move the pickup unit and the collimating lens to first and second initial locations, respectively, upon receiving the detection signal.

15. The apparatus according to claim 14, wherein the simultaneous movement of the pickup unit and the collimating lens are performed after the tray is closed.

16. The apparatus according to claim 14, wherein the simultaneous movement of the pickup unit and the collimating lens are performed before the tray is opened.

17. The apparatus according to claim 14, wherein the controlling unit moves the pickup unit to an inner area of the optical disc, and then to the first initial location.

18. The apparatus according to claim 14, wherein the controller moves the collimating lens away from the optical disc, and then moves the collimating lens to the second initial location.

19. A method of operating an optical pickup unit of a recording and/or reproducing apparatus, including a tray on which an optical disc is placed that opens/closes relative to the apparatus, the method comprising:
detecting the opening or closing of the tray;
outputting a detection signal corresponding to a result of the detection; and
if the detection signal indicates that the tray is closing, simultaneously moving a pickup unit of the optical pickup unit to a first reference location, and a collimating lens of the optical pickup unit to a second reference location; and
simultaneously moving the pickup unit from the first reference location to a first initial location and the collimating lens from the second reference location to a second initial location.

20. A recording and/or reproducing apparatus to record and/or reproduce information onto/from an optical disc, comprising:
a tray on which the optical disc is placed to be opened and closed relative to the apparatus;
an optical pickup control apparatus, including a pickup unit to record/reproduce information onto/from the optical disc using an optical signal reflected therefrom, and a collimating lens installed in the pickup unit to correct a spherical aberration of the optical signal;
a detecting unit to detect an opening or closing of the tray, and to output a detection signal that corresponds to the detected operation;
a controlling unit to simultaneously move the pickup unit and the collimating lens to first and second reference locations and then to first and second initial locations, respectively, upon receiving the detection signal.
